# EUROPÄISCHE PATENTSCHRIFT

(11) **EP 3 473 988 B1**
(45) Veröffentlichungstag und Bekanntmachung des Hinweises auf die Patenterteilung: **29.04.2020**
(21) Anmeldenummer: 17196894.4
(22) Anmeldetag: 17.10.2017
(51) Int. Cl.: G01F 23/284, G01S 13/88

(54) **FÜLLSTANDMESSANORDNUNG MIT SCHLAUCHARTIGEN FLEXIBLEN SENDE- UND EMPFANGS-HOHLLEITERN**
FILL LEVEL MEASURING ASSEMBLY WITH FLEXIBLE HOSE TYPE TRANSMISSION AND RECEIVING WAVEGUIDES
DISPOSITIF DE MESURE D'UN NIVEAU DE REMPLISSAGE DOTÉ DE GUIDES D'ONDES D'ÉMISSION ET DE RÉCEPTION TUBULAIRES ET FLEXIBLES

(43) Veröffentlichungstag der Anmeldung: 24.04.2019
(73) Patentinhaber: VEGA Grieshaber KG, 77709 Wolfach (DE)
(72) Erfinder: HENGSTLER, Clemens, 77716 Haslach (DE); SKOWAISA, Jürgen, 77761 Schiltach (DE)
(74) Vertreter: Maiwald Patent- und Rechtsanwaltsgesellschaft mbH

(56) Entgegenhaltungen:
- US-A- 5 053 775
- US-A- 5 351 036
- US-A1- 2011 282 599

## Beschreibung

### Gebiet der Erfindung

Die Erfindung betrifft die Messung von Füllständen in Behältern. Insbesondere betrifft die Erfindung eine Radar-Füllstandmessanordnung mit einer Antennenverlängerung zur räumlich separierten Anordnung von Antennen.

### Hintergrund der Erfindung

Moderne Lösungen zur Füllstandmessung nutzen verschiedene Technologien zur Ermittlung von Füllständen von Feststoffen und Fluiden. Radarwellen oder Mikrowellen können beispielsweise von einem Sender in Richtung einer Oberfläche eines Behälterfüllgutes ausgesendet werden. Diese werden je nach Beschaffenheit des Füllgutes an dessen Oberfläche reflektiert und von einem Empfänger detektiert. Unter Berücksichtigung der Laufzeiten des Signals können Abstände zwischen Sender, Füllgutoberfläche und Empfänger und so eine Füllhöhe im Behälter ermittelt werden. Dis geschieht in der Regel durch die Auswertung einer sogenannten Echokurve, da in der Regel mehrere Echosignale vorhanden sind. So sind neben dem Füllstandecho auch Störechos und Vielfachechos vorhanden.

Derartige Vorrichtungen werden zunehmend auch in Umgebungen mit extremeren Bedingungen, beispielsweise sehr hohen oder tiefen Temperaturen oder Druckverhältnissen eingesetzt. Dies kann beispielsweise bei der Herstellung und Verarbeitung von Stahl oder Aluminium der Fall sein, wo aufgrund des Herstellungsprozesses sehr hohe Temperaturen auftreten. Elektronische Bauteile können unter diesen Bedingungen in der Regel nicht betrieben werden, weshalb häufig eine räumlich separate Anordnung von Sende-Empfangselektronik und Antenne wünschenswert wäre. Im Stand der Technik sind Lösungen bekannt, wo zwischen Sende-und Empfangselektronik und der Antenne zu diesem Zweck eine Antennenverlängerung vorgesehen ist, die ein Sendesignal und/oder ein Empfangssignal über eine entsprechende Distanz weiterleitet. Hierzu können Kabel oder auch Hohlleiter zum Einsatz kommen, an die allerdings hohe Anforderungen bezüglich Dämpfungsverhalten und Vermeidung von Reflexionen gestellt werden. DE 10057691 A1 zeigt eine Sender-Empfänger-Einheit mit einem Sender, einer Erfassungsantenne und einem Empfänger zum Auswerten eines Echosignals.

US 5 053 775 A und US 5 351 036 A offenbaren Radar-Füllstandmessanordnungen mit getrennten, starr ausgeführten Sende- und Empfangshohlleitern. Aus US 2011/282599 A1 ist eine Füllstandmessanordnung mit einem Mikrowellenhohlleiter bekannt, der schlauchartig flexibel ausgeführt ist.

### Zusammenfassung der Erfindung

Ausführungsformen der Erfindung können vorteilhaft eine Störanfälligkeit einer Füllstandmessanordnung verringern und so die Zuverlässigkeit von Füllstandmessungen erhöhen. Die im folgenden dargestellten Lösung basiert auf den nachfolgend beschriebenen Überlegungen. Aufgrund ihrer elektrischen Eigenschaften werden in vor allem durch ihre Temperaturbeständigkeit Hohlleiter für derartige Verlängerungen genutzt. Bei den bekannten Antennenverlängerungen wird von einer Sensoreinheit eine Radarwelle in den Hohlleiter eingekoppelt. Die Radarwelle breitet sich im Hohlleiter aus, gelangt zur Antenne und wird von dieser abgestrahlt. Das von der Füllgutoberfläche reflektierte Signal wird von der selben Antenne zeitlich versetzt empfangen und über ebenfalls denselben Hohlleiter wieder an die Sensoreinheit zurückgeführt.

Allerdings sind häufig nachteilige Reflexionseffekte und Überlagerungseffekte festzustellen, die durch Kanten, Übergänge, Kupplungen, Öffnungen, Stecker oder andere Unregelmäßigkeiten an der Oberfläche der Antenne und deren Verlängerung verursacht werden können. So können sich reflektierte Restsignale eines bereits von der Antenne abgestrahlten Radarwellenpulses zum Zeitpunkt des Empfangs des Echosignals durch Mehrfachreflexionen und die entsprechenden Laufzeiten noch im Hohlleiter befinden. Diese überlagern sich mit dem Empfangssignal und können zu Störungen und Verfälschungen führen. Zudem steht ein zusätzlicher Aufwand zur Reduzierung derartiger unerwünschter Effekte in vielen Fällen wirtschaftlich in keinem sinnvollen Verhältnis zum erreichbaren Ergebnis.

Mit der Möglichkeit der Verwendung immer höherer Frequenzen im Bereich von über 20 GHz ergeben sich aufgrund der kleineren Wellenlängen auch neue Möglichkeiten, die Vorrichtungen geometrisch kleiner auszuführen. Dies gilt insbesondere für die Antennen, da trotz kleinerer Abmessungen dennoch eine ausreichend gute Fokussierung gewährleistet werden kann. Allerdings steigt mit den höheren Frequenzen auch eine Empfindlichkeit und Anfälligkeit gegenüber Störungen, Überlagerungen und Reflexionen. Hier können sich bereits Oberflächenstrukturen in der Größenordnung von Hundertstel Millimetern nachteilig auf eine Signalqualität auswirken.

Es wird daher eine Füllstandmessanordnung vorgeschlagen, die eine Sendeeinheit aufweist, die ausgestaltet ist, ein Messsignal im Frequenzbereich von mindestens 75 GHz zu generieren. Dieses Messsignal kann beispielsweise ein Radarsignal, Mikrowellensignal oder Ähnliches sein, dass beispielsweise gepulst oder auch kontinuierlich erzeugt und/oder ausgesendet werden kann. Weiterhin ist eine Empfangseinheit vorgesehen, die ausgestaltet ist, dass von der Sendeeinheit generierte Messsignal zu detektieren. In einem Beispiel sind die Sendeeinheit und die Empfangseinheit in einer gemeinsamen Baugruppe integriert und über getrennte Anschlüsse zugänglich. Eine Sendeantenne ist ausgeführt, dass von der Sendeeinheit generierte Messsignal In Richtung einer Oberfläche eines Füllgutes in einem Behälter auszusenden. Die Füllstandmessanordnung weist weiterhin eine Empfangsantenne auf, die ausgeführt ist, ein von der Oberfläche des Füllgutes reflektiertes Messsignal zu empfangen.

Ein Sendehohlleiter ist ausgeführt, dass von der Sendeeinheit generierte Messsignal an die Sendeantenne zu übertragen. Dies kann beispielsweise durch eine geeignete Schraubverbindung oder Steckverbindung erfolgen, wobei das Messsignal von der Sendeeinheit in den Sendehohlleiter eingekoppelt wird. Entsprechend ist ein Empfangshohlleiter vorgesehen, der ausgeführt ist, dass von der Empfangsantenne empfangene Messsignal an die Empfangseinheit zu übertragen. Der Sendehohlleiter ist also in einer Weise separiert vom Empfangshohlleiter angeordnet, dass das zu sendende Messsignal und das empfangene Messsignal elektromagnetisch getrennt voneinander geführt sind. Mit anderen Worten kommen auf diese Weise das gesendete Messsignal und das empfangene Messsignal physikalisch bzw. elektrisch nicht miteinander in Kontakt und können sich somit nicht überlagern oder gegenseitig beeinflussen. Dabei ist der Sendehohlleiter und/oder der Empfangshohlleiter so ausgeführt, dass die Sendeantenne und/oder die Empfangsantenne räumlich separiert von der Sendeeinheit und/oder Empfangseinheit angeordnet werden können. Mit anderen Worten sind Signalwege für das gesendete und empfangene Messsignal räumlich voneinander getrennt. Dies kann beispielsweise auch dadurch realisiert sein, dass ein Querschnitt in ein und demselben Rohr oder Profil durch eine dielektrische oder elektrisch/elektromagnetisch isolierende Zwischenwand geteilt ist. Ein Vorteil dieser Anordnung kann darin gesehen werden, dass unerwünschte Störeffekte, wie beispielsweise Reflexionen, Überlagerungen oder ähnliche Störeffekte ausgeschlossen oder zumindest minimiert werden können. Ein weiterer Vorteil kann darin gesehen werden, dass eine Güte oder Qualität des Hohlleiters nur noch begrenzten Einfluss auf die Qualität des Messsignals hat und daher geringere Anforderungen an eine Qualität und Güte des Hohlleiters mit entsprechendem Kostensenkungspotenzial gestellt werden können. Beispielsweise können auf diese Weise vorteilhaft Bögen, Verbindungen oder andere Variationen der Hohlleiter realisiert werden. Durch die verbesserte Signalqualität können weiterhin schwierig zu ermittelnde Füllstände von Feststoffen wie beispielsweise Kohle in Behältern besser ermittelt werden.

Der Sendehohlleiter und/oder der Empfangshohlleiter sind schlauchartig flexibel ausgeführt. Dies kann den Vorteil haben, dass bei sich verändernden Bedingungen oder Ortsveränderungen mit wenig Aufwand insbesondere die Position der Sendeantenne und/oder der Empfangsantenne verändern lassen, ohne die zugehörigen Hohlleiter ersetzen oder aufwendig mechanisch anpassen zu müssen. Ebenfalls denkbar sind transportable oder mobile Füllstandmessanordnungen, die beispielsweise nur temporär zur Messung von Füllständen benutzt werden sollen.

In einer Ausführungsform sind der Sendehohlleiter und/oder der Empfangshohlleiter als plastisch verformbares Rohr ausgeführt. Vorteil kann hier sein, dass die Hohlleiter genauer an die jeweils gegebenen örtlichen Bedingungen angepasst werden können. Diese können beispielsweise durch die Form eines Behälters oder begrenzte Möglichkeiten der Leitungsführung bestimmt sein.

In einem Beispiel ist die Sendeeinheit ausgeführt, ein Messsignal im Frequenzbereich von um die 80 GHz, beispielsweise zwischen 75 und 85 GHz zu generieren. In einer weiteren Ausführungsform ist die Sendeeinheit ausgeführt, ein Messsignal im Frequenzbereich von um die 120 GHz, beispielsweise zwischen 122 und 123 GHz zu generieren. Vorteil der Nutzung dieser höheren Frequenzbänder ist eine verbesserte Fokussierung des gesendeten Messsignals durch die Sendeantenne bzw. eine verbesserte Fokussierung des empfangenen Messsignals durch die Empfangsantenne. Des Weiteren können durch die höheren Frequenzen kleinere Antennen und geringere Querschnitte realisiert werden.

In einer Ausführungsform ist die Sendeantenne derart räumlich separiert von der Empfangsantenne angeordnet, sodass sich ein Winkel zwischen einem Signalweg des ausgesendeten Messsignals und einem Signalweg des empfangenen Messsignals ein Winkel von mindestens 5° ergibt. In einer weiteren Ausführungsform ergibt sich ein Winkel von mindestens 15°. Als Vorteil kann hier gesehen werden, dass, auch durch das Vorhandensein von zwei separaten Antennen, verschiedene Positionen der Sendeantenne und der Empfangsantenne gewählt werden können. So können beispielsweise durch Feststoffe in Behältern ungünstige Reflexionseigenschaften in Richtung der Sendeantenne bestehen, sodass hierdurch ein Empfang von stärkeren reflektierten Signalen an besser geeigneten Positionen im Behälter ermöglicht werden kann.

In einer Ausführungsform ist am Sendehohlleiter und/oder am Empfangshohlleiter ein Anschluss für Spülluft vorgesehen. Bekanntermaßen kann es in bestimmten Fällen vorkommen, dass Partikel wie Staub, Flüssigkeiten, Öle oder Ähnliches in einen Innenbereich des Hohlleiters gelangen und so unerwünschte Reflexionen verursachen kann. Durch das Einbringen von Spülluft können diese Partikel entfernt oder das Entstehen und /oder Ablagern solche verhindert werden. Ein entsprechender Anschluss kann vorteilhaft einen Aufwand und Kosten zur Reinigung der Hohlleiter verringern.

In einer Ausführungsform ist der Sendehohlleiter und oder der Empfangshohlleiter mehrteilig ausgeführt. Mit anderen Worten können hierdurch vorteilhaft verschiedene geometrische Formen des Hohlleiters realisiert werden oder auch mehrere kürzere Hohlleiterabschnitte zu einer längeren gesamten Antennenverlängerung kombiniert werden.

In einer Ausführungsform ist zur Verbindung zwischen der Sendeeinheit und dem Sendehohlleiter und/oder zur Verbindung zwischen der Empfangseinheit und dem Empfangshohlleiter ein Anpassungsstück vorgesehen. Dieses ist ausgeführt, eine Querschnittsform eines Hohlleiteranschlusses der Sendeeinheit bzw. der Empfangseinheit an eine Querschnittsform des Sendehohlleiters bzw. des Empfangshohlleiters anzupassen. So kann es in vielen Fällen vorteilhaft sein, aufgrund der durch die hohen Frequenzen bedingten geringeren Querschnitte am Ausgang der Sendeeinheit bzw. am Eingang der Empfangseinheit zur weiteren Übertragung und Weiterleitung des gesendeten Messsignals bzw. des empfangenen Messsignals größere Querschnitte der Hohlleiter zu verwenden. Diese geringen Querschnitte liegen frequenzbedingt im Bereich von wenigen Millimetern. Das Anpassungsstück kann vorteilhaft eine Überleitung der Messsignale in Hohlleiter mit größeren Querschnitten, beispielsweise von 12-120 mm, ermöglichen. Diese können dann vorteilhaft ein besseres mechanisches Handling und besser handhabbare Anschlüsse bei teilweise verbesserten elektrischen Eigenschaften ermöglichen. Insbesondere können in einem Beispiel Anschlüsse für Spülluft am Sendehohlleiter und/oder am Empfangshohlleiter mechanisch stabiler ausgelegt werden.

### Kurze Beschreibung der Figuren

Im Folgenden werden Ausführungsbeispiele der Erfindung mit Bezug auf die beiliegenden Figuren detailliert beschrieben. Weder die Beschreibung noch die Figuren sollen als die Erfindung einschränkend ausgelegt werden.
Fig. 1 zeigt ein Ausführungsbeispiel einer Füllstandmessanordnung gemäß dem Stand der Technik mit einer Antennenverlängerung und einer kombinierten Sende-und Empfangsantenne.
Fig. 2 zeigt ein Ausführungsbeispiel einer Füllstandmessanordnung gemäß der Erfindung mit einem schlauchartig flexibel ausgeführten Sendehohlleiter und Empfangshohlleiter.
Fig. 3 zeigt ein Ausführungsbeispiel einer Füllstandmessanordnung gemäß der Erfindung mit einem als Rohr ausgeführten Sendehohlleiter und Empfangshohlleiter.
Fig. 4 zeigt ein Ausführungsbeispiel einer Füllstandmessanordnung gemäß der Erfindung mit jeweils einem Anpassungsstück am Sendehohlleiter und Empfangshohlleiter.
Fig. 5 zeigt ein Anwendungsbeispiel einer Füllstandmessanordnung gemäß der Erfindung mit einem Behälter mit räumlich separiert angeordneter Sendeantenne und Empfangsantenne.

Die Zeichnungen sind lediglich schematisch und nicht maßstabsgetreu. Grundsätzlich sind identische oder ähnliche Teile mit den gleichen Bezugszeichen versehen.

### Detaillierte Beschreibung der Figuren

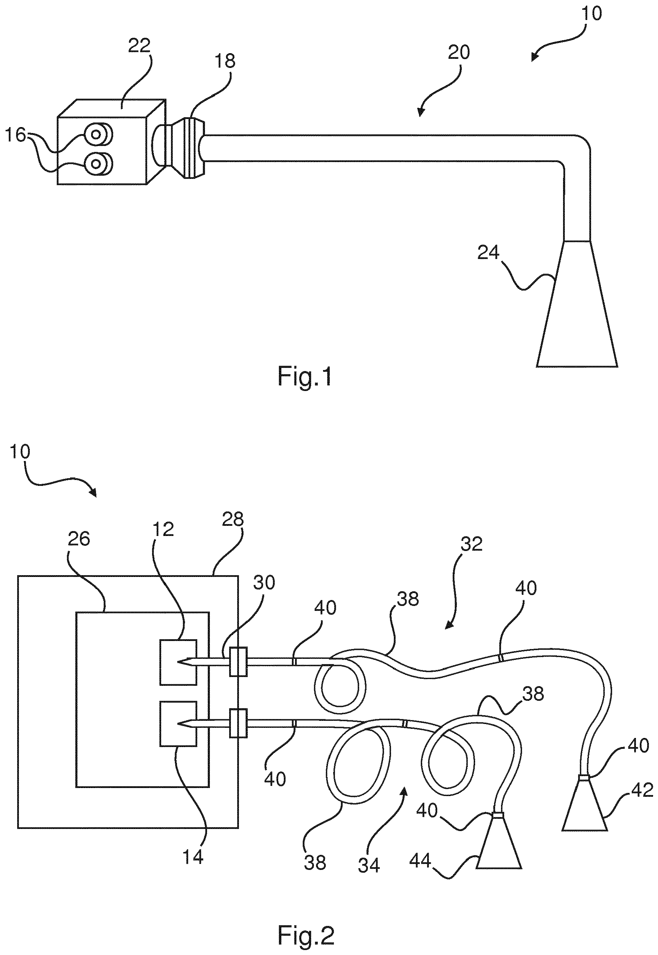

Fig. 1 zeigt in vereinfachter schematischer Darstellung eine im Stand der Technik bekannte Füllstandmessanordnung. Eine kombinierte Sende und Empfangseinheit 22 sind in diesem Beispiel als eine integriere Baugruppe ausgeführt. Zur Steuerung und zur Übertragung von Messwerten sind Anschlüsse 16 vorgesehen. Über ein Anschlussstück 18 ist ein einziger Hohlleiter 20 zur Weiterleitung sowohl eines gesendeten Messsignals als auch eines empfangenen Messsignals mit der kombinierten Sende- und Empfangseinheit 22 verbunden. Am entfernten Ende des Hohlleiters 20 ist eine kombinierte Sende- und Empfangsantenne 24 angeordnet. Durch den Hohlleiter 20 wird ein Abstand zwischen der kombinierten Sende- und Empfangsantenne 24 und der kombinierten Sende- und Empfangseinheit 22 erreicht, was einen Schutz der Elektronik vor beispielsweise hohen Temperaturen im Bereich der kombinierten Sende- und Empfangsantenne 24 erlaubt. Da für die Weiterleitung des gesendeten Messsignals und des empfangenen Messsignals nur ein einziger Hohlleiter 20 zur Verfügung steht, kann es durch Reflexionen des gesendeten Messsignals zu Überlagerung mit dem empfangenen Messsignal kommen, die die Qualität des Messergebnisses beeinträchtigen können.

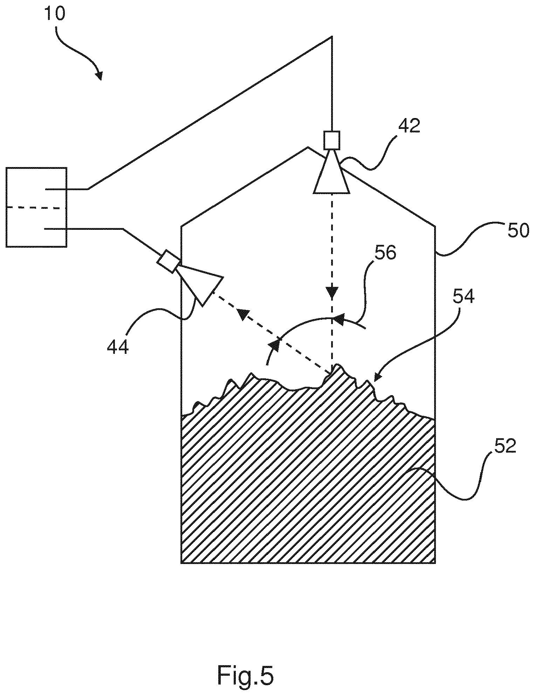

In Fig. 2 ist eine Ausführungsform einer Füllstandmessanordnung gemäß der Erfindung gezeigt. Eine Sendeeinheit 12 und eine Empfangseinheit 14 sind an einer Elektronikbaugruppe 26 angeordnet, die wiederum zum mechanischen Schutz in einem Gehäuse 28 angeordnet ist. An der Sendeeinheit 12 und der Empfangseinheit 14 sind jeweils Anschlusshohlleiter 30 zur Verbindung mit externen Leitern oder Geräten vorgesehen. Außerhalb des Gehäuses 28 schließen sich über Verbindungsstellen 40 flexible schlauchartige Hohlleitersegmente 38 an, die jeweils in ihrer Gesamtheit einen Sendehohlleiter 32 und einen Empfangshohlleiter 34 bilden. Ebenfalls über Verbindungsstellen 40 sind am entfernten Ende des Sendehohlleiters 32 eine Sendeantenne 42 und am Empfangshohlleiter 38 eine Empfangsantenne 44 angebracht. Durch die flexible schlauchartige Ausführung kann die Sendeantenne 42 und die Empfangsantenne 44 auf verschiedene örtliche Gegebenheiten am Behälter angepasst werden und gegebenenfalls neu positioniert werden. In einem Beispiel ist es auch möglich, die Sendeantenne 42 und die Empfangsantenne 44 an verschiedenen Stellen am Behälter anzuordnen. Siehe hierzu auch Fig. 5.

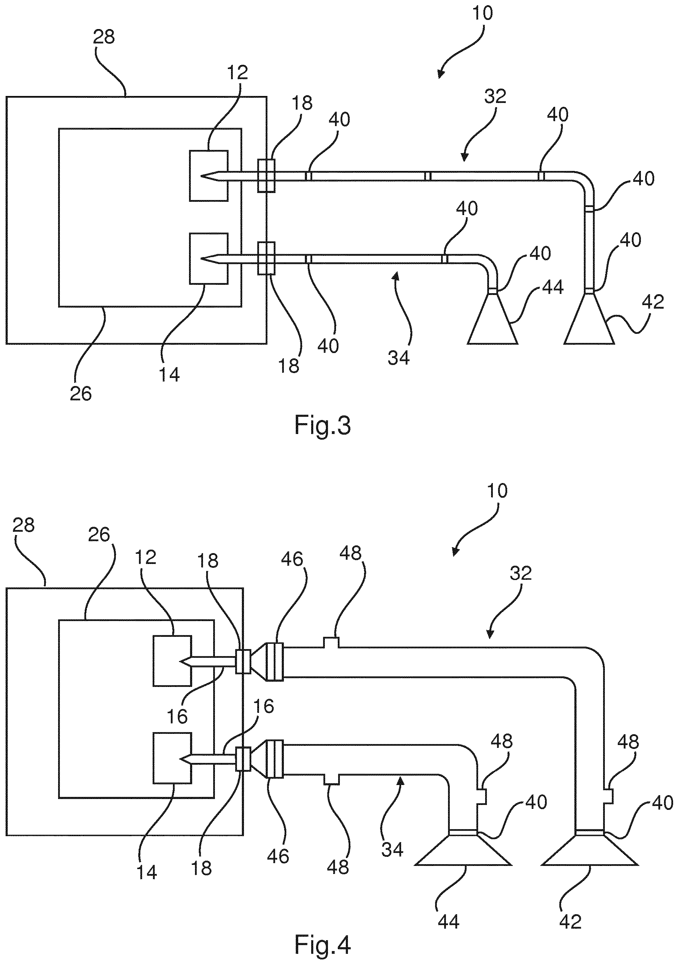

In Fig. 3 ist eine Füllstandmessanordnung 10 gemäß der Erfindung mit einem als Rohr ausgeführten Sendehohlleiter 32 und ebenfalls als Rohr ausgeführten Empfangshohlleiter 34 gezeigt. Die Hohlleiter 32,34 können als verformbares Rohr ausgeführt sein, was eine Anpassung der Form der Hohlleiter 32,34 an verschiedene lokale räumliche Gegebenheiten, zum Beispiel die Form eines Behälters, ermöglichen kann. Der Sendehohlleiter 32 und der Empfangshohlleiter 34 sind jeweils über Verbindungsstellen 40 mit einem Anschlussstück 18 mit einer Sendeeinheit 12 und einer Empfangseinheit 14 analog zur Darstellung in Fig. 2 verbunden. Auch in diesem Beispiel sind an den jeweils entfernten Enden des Sendehohlleiters 32 und des Empfangshohlleiters 34 über Verbindungsstellen 40 eine Sendeantenne 42 und eine Empfangsantenne 44 angeordnet. Der Sendehohlleiter 32 und der Empfangshohlleiter 34 sind in diesem Beispiel aus einer Vielzahl von Teilsegmenten gebildet, die über Verbindungsstellen 40 miteinander verbunden sind.

In Fig. 4 ist eine Füllstandmessanordnung 10 in einem weiteren Beispiel gemäß der Erfindung dargestellt. Analog zu Fig. 2 und Fig. 3 ist eine Sendeeinheit 12 und eine Empfangseinheit 14 als Teil einer Elektronikbaugruppe 26 in einem Gehäuse 28 angeordnet. Am Anschlussstück 18 des Anschlusses 16 ist ein Anpassungsstück 46 vorgesehen, das einen Übergang des gesendeten Signals bzw. des empfangenen Signals vom Anschlussstück 18 auf den im Durchmesser breiteren Sendehohlleiter 32 bzw. auf den im Durchschnitt größeren Empfangshohlleiter 34 ermöglicht. Das Anpassungsstück 46 soll hier eine möglichst verlustfreie und störungsfreie Übertragung des empfangenen Signals bzw. des gesendeten Signals in Kombination mit einer stabilen mechanischen Kopplung ermöglichen.

Durch den größeren Durchschnitt des Sendehohlleiters 32 und des Empfangshohlleiters 34 können verbesserte elektrische Eigenschaften sowie eine verbesserte mechanische Stabilität erreicht werden. Die Kopplung des Sendehohlleiters 32 und des Empfangshohlleiters 34 mit der Sendeantenne 42 und der Empfangsantenne 44 erfolgt auch hier beispielsweise über Verbindungsstellen 40. Am Sendehohlleiter 32 und am Empfangshohlleiter 34 sind weiterhin Spülluftanschlüsse 48 vorgesehen. Hier können über geeignete Kupplungen und Schläuche Gase zu Reinigungszwecken in den Sendehohlleiter 32 und in den Empfangshohlleiter 34 geleitet werden. Das Gas tritt beispielsweise über die Antenne aus. Dadurch wird auch die Antenne gekühlt/gereinigt.

Es kann alternativ oder zusätzlich vorgesehen sein, dass das Gas an entfernt angeordneten weiteren Spülluftanschlüssen 48 wieder aus dem Sendehohlleiter 32 und/oder Empfangshohlleiter 34 austritt.

Fig. 5 zeigt ein Anwendungsbeispiel einer Füllstandanordnung 10 gemäß der Erfindung an einem Behälter 50 mit einem Füllgut 52. In diesem Beispiel ist das Füllgut 52 derart beschaffen, dass eine Füllgutoberfläche 54 sehr uneben beschaffen ist und vergleichsweise schlechte Reflexionseigenschaften aufweist. Ein Beispiel hierfür können Schüttgüter wie Kohle sein. Problematisch kann hier zusätzlich eine nur bedingt reflektierende Oberfläche des Füllgutes sein, was durch die erhöhte Absorption des gesendeten Messsignals durch das Füllgut eine Ermittlung des Füllstandes ohnehin erschwert. Eine Lösung kann nun darin bestehen, dass zwar die Sendeantenne 42 beispielsweise in einem Deckelbereich des Behälters 50 angeordnet ist, die Empfangsantenne 44 allerdings entfernt, beispielsweise in einem seitlichen Bereich des Behälterdeckels oder an einer Seitenwand angeordnet ist. Hierdurch ergibt sich ein Reflexionswinkel 56, der gemäß einem Beispiel mindestens 5° und gemäß einem weiteren Beispiel mindestens 15° beträgt. Durch diese Anordnung können in vielen Fällen empfangene Messsignale in besserer Qualität detektiert werden und somit eine Qualität und Zuverlässigkeit der Messung insgesamt verbessert werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Füllstandmessanordnung (10), aufweisend:
- eine Sendeeinheit (12), eingerichtet, ein Messsignal im Frequenzbereich von mindestens 75 GHz zu generieren;
- eine Empfangseinheit (14), eingerichtet, das von der Sendeeinheit (12) generierte Messsignal zu detektieren;
- eine Sendeantenne (42), die eingerichtet ist, das von der Sendeeinheit (12) generierte Messsignal in Richtung einer Oberfläche (54) eines Füllgutes (52) in einem Behälter (50) auszusenden;
- eine Empfangsantenne (44), die eingerichtet ist, ein von der Oberfläche (54) des Füllgutes (52) reflektiertes Messsignal zu empfangen;
- einen Sendehohlleiter (32), der eingerichtet ist, das von der Sendeeinheit (12) generierte Messsignal an die Sendeantenne (42) zu übertragen; und
- einen Empfangshohlleiter (34), der eingerichtet ist, das von der Empfangsantenne (44) empfangene Messsignal an die Empfangseinheit (14) zu übertragen;
wobei der Sendehohlleiter (32) und/oder der Empfangshohlleiter (34) schlauchartig flexibel ausgeführt sind;
wobei der Sendehohlleiter (32) derart separiert vom Empfangshohlleiter (34) angeordnet ist, dass das zu sendende Messsignal und das empfangene Messsignal elektromagnetisch getrennt voneinander geführt sind;
wobei der Sendehohlleiter (32) und/oder der Empfangshohlleiter (34) so ausgeführt sind, dass die Sendeantenne (42) und/oder die Empfangsantenne (44) räumlich separiert von der Sendeeinheit (12) und/oder Empfangseinheit (14) angeordnet werden können.

2. Füllstandmessanordnung (10) gemäß Anspruch 1, wobei der Sendehohlleiter (32) und/oder der Empfangshohlleiter (34) als plastisch verformbares Rohr ausgeführt sind.

3. Füllstandmessanordnung (10) gemäß einem der vorhergehenden Ansprüche, wobei die Sendeeinheit (12) ausgeführt ist, ein Messsignal im Frequenzbereich von mindestens 120 GHz zu generieren.

4. Füllstandmessanordnung (10) gemäß einem der vorhergehenden Ansprüche, wobei die Sendeantenne (42) derart räumlich separiert von der Empfangsantenne (44) angeordnet ist, sodass sich ein Winkel (56) zwischen einem Signalweg des ausgesendeten Messsignals und dem Signalweg des empfangenen Messsignals von mindestens 5 Grad ergibt.

5. Füllstandmessanordnung (10) gemäß Anspruch 4, wobei sich ein Winkel (56) von mindestens 15 Grad ergibt.

6. Füllstandmessanordnung (10) gemäß einem der vorhergehenden Ansprüche, wobei am Sendehohlleiter (32) und/oder am Empfangshohlleiter (34) ein Anschluss für Spülluft (48) vorgesehen ist.

7. Füllstandmessanordnung (10) gemäß einem der vorhergehenden Ansprüche, wobei der Sendehohlleiter (32) und/oder der Empfangshohlleiter (34) mehrteilig ausgeführt sind.

8. Füllstandmessanordnung (10) gemäß einem der vorhergehenden Ansprüche, wobei zur Verbindung zwischen der Sendeeinheit (12) und dem Sendehohlleiter (32) und/oder zur Verbindung zwischen der Empfangseinheit (14) und dem Empfangshohlleiter (34) ein Anpassungsstück (46) vorgesehen ist, das ausgeführt ist, eine Querschnittsform eines Hohlleiteranschlusses der Sendeeinheit (12) bzw. der Empfangseinheit (14) an eine Querschnittsform des Sendehohlleiters (32) bzw. des Empfangshohlleiters (34) anzupassen.

## Claims

1. Level measuring arrangement (10) comprising:
- a transmitter unit (12) configured to generate a measurement signal in the frequency range of at least 75 GHz;
- a receiving unit (14), configured to detect the measuring signal generated by the transmitting unit (12);
- an emitting antenna (42) configured to emit the measuring signal generated by the emitting unit (12) in the direction of a surface (54) of a product (52) in a container (50);
- a receiving antenna (44) configured to receive a measurement signal reflected from the surface (54) of the product (52);
- an emitting waveguide (32) configured to transmit the measurement signal generated by the emitting unit (12) to the emitting antenna (42); and
- a receiving waveguide (34) configured to transmit the measurement signal received by the receiving antenna (44) to the receiving unit (14);
wherein the transmitting waveguide (32) and/or the receiving waveguide (34) are designed to be flexible in a hose-like manner;
wherein the transmitting waveguide (32) is arranged separately from the receiving waveguide (34) in such a way that the measurement signal to be transmitted and the received measurement signal are guided electromagnetically separately from one another;
wherein the transmitting waveguide (32) and/or the receiving waveguide (34) are configured such that the transmitting antenna (42) and/or the receiving antenna (44) can be arranged spatially separated from the transmitting unit (12) and/or receiving unit (14).

2. Level measuring arrangement (10) according to claim 1, wherein the transmitting waveguide (32) and/or the receiving waveguide (34) are designed as a plastically deformable tube.

3. Level measuring arrangement (10) according to one of the preceding claims, wherein the transmitting unit (12) is designed to generate a measuring signal in the frequency range of at least 120 GHz.

4. Level measuring arrangement (10) according to one of the preceding claims, wherein the transmitting antenna (42) is arranged spatially separated from the receiving antenna (44) in such a way that an angle (56) of at least 5 degrees results between a signal path of the transmitted measuring signal and the signal path of the received measuring signal.

5. Level measuring arrangement (10) according to claim 4, wherein an angle (56) of at least 15 degrees results.

6. Level measuring arrangement (10) according to one of the preceding claims, wherein a connection for purge air (48) is provided on the transmitting waveguide (32) and/or on the receiving waveguide (34).

7. Level measuring arrangement (10) according to one of the preceding claims, wherein the transmitting waveguide (32) and/or the receiving waveguide (34) are constructed in several parts.

8. Level measuring arrangement (10) according to one of the preceding claims, wherein for the connection between the transmitting unit (12) and the transmitting waveguide (32) and/or for the connection between the receiving unit (14) and the receiving waveguide (34) an adapter (46) is provided which is designed to adapt a cross-sectional shape of a waveguide connection of the transmitting unit (12) or the receiving unit (14) to a cross-sectional shape of the transmitting waveguide (32) or the receiving waveguide (34).

## Revendications

1. Dispositif de mesure de niveau de remplissage (10), comportant :
- une unité d'émission (12), configurée pour générer un signal de mesure dans le domaine de fréquence d'au moins 75 GHz ;
- une unité de réception (14), configurée pour détecter le signal de mesure généré par l'unité d'émission (12) ;
- une antenne d'émission (42), qui est configurée pour émettre le signal de mesure généré par l'unité d'émission (12) en direction d'une surface (54) d'un produit de remplissage (52) dans un contenant (50) ;
- une antenne de réception (44), qui est configurée pour recevoir un signal de mesure réfléchi par la surface (54) du produit de remplissage (52) ;
- un guide d'ondes d'émission (32), qui est configuré pour transmettre le signal de mesure généré par l'unité d'émission (12) à l'antenne d'émission (42) ; et
- un guide d'ondes de réception (34), qui est configuré pour transmettre le signal de mesure reçu par l'antenne de réception (44) à l'unité de réception (14) ;
le guide d'ondes d'émission (32) et/ou le guide d'ondes de réception (34) étant réalisés tubulaires et flexibles ;
le guide d'ondes d'émission (32) étant disposé séparé du guide d'ondes de réception (34) de telle manière que le signal de mesure à envoyer et le signal de mesure à recevoir sont guidés de façon électromagnétiquement séparée l'un de l'autre ;
le guide d'ondes d'émission (32) et/ou le guide d'ondes de réception (34) étant réalisés de telle sorte que l'antenne d'émission (42) et/ou l'antenne de réception (44) peuvent être disposées de façon physiquement séparée de l'unité d'émission (12) et/ou de l'unité de réception (14).

2. Dispositif de mesure de niveau de remplissage (10) selon la revendication 1, dans lequel le guide d'ondes d'émission (32) et/ou le guide d'ondes de réception (34) sont réalisés sous la forme d'un tube apte à subir une déformation plastique.

3. Dispositif de mesure de niveau de remplissage (10) selon l'une des revendications précédentes, dans lequel l'unité d'émission (12) est réalisée pour générer un signal de mesure dans le domaine de fréquence d'au moins 120 GHz.

4. Dispositif de mesure de niveau de remplissage (10) selon l'une des revendications précédentes, dans lequel l'antenne d'émission (42) est disposée de façon physiquement séparée de l'antenne de réception (44) de telle manière qu'on obtient un angle (56) d'au moins 5 degrés entre un trajet de signal du signal de mesure émis et le trajet de signal du signal de mesure reçu.

5. Dispositif de mesure de niveau de remplissage (10) selon la revendication 4, dans lequel on obtient un angle (56) d'au moins 15 degrés.

6. Dispositif de mesure de niveau de remplissage (10) selon l'une des revendications précédentes, dans lequel un raccordement pour de l'air de balayage (48) est prévu sur le guide d'ondes d'émission (32) et/ou sur le guide d'ondes de réception (34).

7. Dispositif de mesure de niveau de remplissage (10) selon l'une des revendications précédentes, dans lequel le guide d'ondes d'émission (32) et/ou le guide d'ondes de réception (34) sont réalisés en plusieurs parties.

8. Dispositif de mesure de niveau de remplissage (10) selon l'une des revendications précédentes, dans lequel un élément d'adaptation (46) est prévu pour la liaison entre l'unité d'émission (12) et le guide d'ondes d'émission (32) et/ou pour la liaison entre l'unité de réception (14) et le guide d'ondes de réception (34), ledit élément d'adaptation étant réalisé pour adapter une forme de section transversale d'un raccordement de guide d'ondes de l'unité d'émission (12) ou de l'unité de réception (14) à une forme de section transversale du guide d'ondes d'émission (32) ou du guide d'ondes de réception (34).
